# EUROPEAN PATENT APPLICATION

(11) **EP 2 426 863 A1**
(43) Date of publication of application: **07.03.2012**
(21) Application number: 09843875.7
(22) Date of filing: 30.04.2009
(51) Int. Cl.: H04L 12/28

(54) **COMMUNICATION METHOD IN AUTOMATIC SYSTEM**

(71) Applicant: Siemens Aktiengesellschaft, 80333 München (DE)
(72) Inventor: TIAN, Jifeng, Beijing 100102 (CN); LI, Hui, Beijing 100016 (CN); LAMPE, Mattias, Beijing 100102 (CN); MUELLER, Joerg, 76351 Linkenheim (DE)
(86) International application number: PCT/CN2009/071582
(87) International publication number: WO 2010/124463

(57) **Abstract**

The present invention proposes a communication method in an automation system, wherein said system comprises an access point and more than one client terminals, said client terminals receive downlink data sent from said access point and send uplink data to said access point, and said data transmission is divided into a master multiple receiver aggregation phase and more than one slave multiple receiver aggregation phases; during said master multiple receiver aggregation phase, the access point aggregates the data to be sent to the more than one client terminals into one packet for transmitting in the downlink; and during said slave multiple receiver aggregation phases, the access point aggregates the data in which errors have happened when being transmitted during said master multiple receiver aggregation phase into one packet for transmitting in the downlink. The method of the present invention can have strict control, via the access point, over the uplink and downlink data transmission, thus enhancing the certainty during automation communication and further reducing the cycle time.

## Description

### Technical field

The present invention relates to a communication method in an automation system and, in particular, to a communication method which is used to carry out in real-time deterministic communication in an automation system.

### Background art

In the series of automation products SIMATIC, the PROFINET IO protocol (PNIO protocol) is used between distributed I/O devices and an I/O controller to carry out fast and effective data exchange. The PROFINET 10 protocol introduces the industrial Ethernet technology into the field at first level. The PNIO communication is a cyclic communication, and in this communication mechanism, the I/O controller communicates with each of the I/O devices one by one within a time interval which is determined in advance. Said time interval is referred to as the cycle time or PNIO updating time, and it has to be less than the time cycle of each I/O device accessed by it. In order to ensure that the I/O devices can be controlled accurately, the above cycle time has to be as short as possible. Therefore, the difficulties faced by such cyclic communication systems, with the PNIO communication as an example, are: first of all, the communication certainty between the I/O controller and the I/O devices needs to be ensured, that is to say, the I/O controller is made to communicate with a designated I/O device within a determined time period; secondly, the cycle time should be as short as possible; this needs to be ensured especially when the number of the I/O devices is increased. In industrial fields, both of the above two points are achieved by the PROFINET standards. When the real-time communication is carried out by using the PROFINET 10, a rather typical example is that the cycle time can reach 8 ms in the case where there are 60 I/O devices.

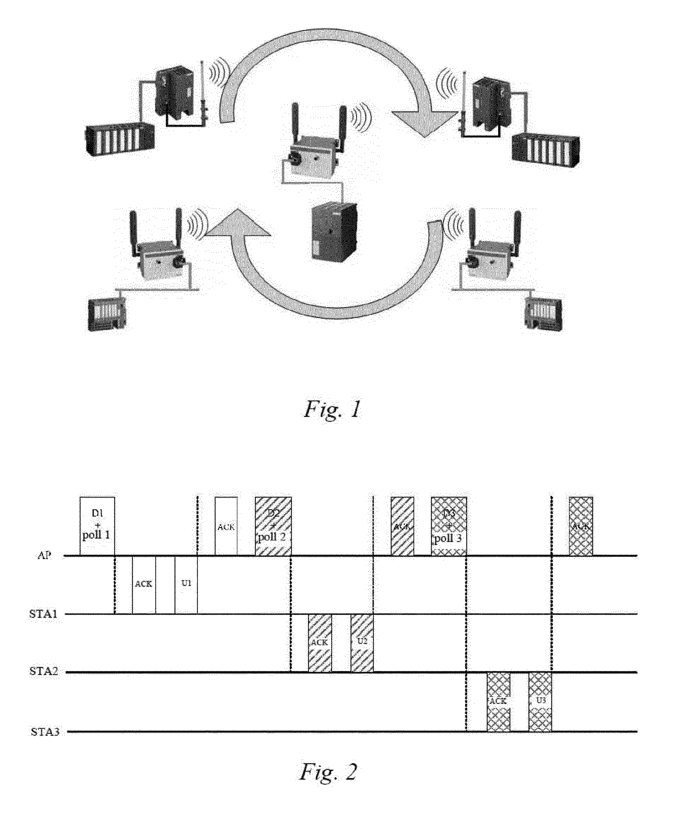

Currently, as wireless networks are becoming increasingly popular, wireless LAN (WLAN) devices have also been introduced into the automation systems, so that another communication connection mode is provided when cable connections cannot be effectively used with mobile devices. Fig. 1 provides a schematic diagram of a WLAN communication using the PNIO protocol. In this case, an access point (AP) is located in the center and the four devices around it are client terminals (STA).

However, in WLAN communication based on the PNIO protocol, the difficulties faced by the cyclic communication are even more prominent. This is because: firstly, a distributed coordination function (DCF) is used in the normal WLAN system to provide a channel access solution, which means that all the client terminals have identical priority to access the channel at any time. It is apparent that since the data volume to be transmitted by some client terminals may be very large, it is very difficult for this solution to ensure the certainty and instantaneity of the communication. Secondly, in order to avoid causing collisions in the channel access process, it is necessary to introduce a distributed inter frame space (DIFS) and an index backoff solution before transmitting the real data. However, in these two solutions, in order to ensure that each device is able to transmit data, a large amount of additional overheads are required, and these overheads would then increase the cycle time.

In order to ensure that deterministic communication can be carried out between the I/O devices and the I/O controller, some channel access solutions which are fully or partly controlled by the AP are proposed in the prior art. For example, a point coordination function (PCF) is also proposed together with the above DCF solution in the 802.11 standards. The PCF solution is based on a polling mechanism. That is to say, the access point (AP) inquires into each client terminal (STA) according to a polling list located thereon. The client terminal (STA) can access the channel only after having obtained an inquiry from the access point. For the data exchange in the PCF solution, reference can be made to Fig. 2. In this case, D1 indicates the transfer of downlink data from the access point AP to a client terminal STA1, D2 indicates the transfer of downlink data from the access point AP to a client terminal STA2, and D3 indicates the transfer of downlink data from the access point AP to a client terminal STA3. When the access point AP transfers downlink data to the client terminal STA1, the AP first puts the data D1 to be sent to STA1 together with a poll packet Poll1 to send them to STA1. After having received the above packet, STA1 first decapsulates the data, which the access point AP requires to be sent by itself, from the Poll1 packet, then STA1 first sends an acknowledgement ACK for the downlink data sent by the access point AP, and then sends uplink data to the access point AP. For the received uplink data which is sent by STA1, the access point AP sends an acknowledgement ACK. When the downlink data is transferred from the access point AP to client terminals STA2 andSTA3, this is also carriedout according to the above steps.

Although the PCF solution has a degree of certainty in communication, it does not have complete certainty. In other words, the PCF solution can achieve the control of each client terminal STA via the access pointAP over the downlink, thus achieving real-time and determinate communication over the downlink, however, communication certainty still cannot be ensured over the uplink. For example, the packet sent by STA1 to the access point AP may be very long, so that the access point AP cannot be certain about the specific time when the packet to STA2 next time is sent. In addition to this, at the moment, the PCF solution still does not have effective hardware support. The above two aspects of defects are the reasons for the PCF not having widespread application.

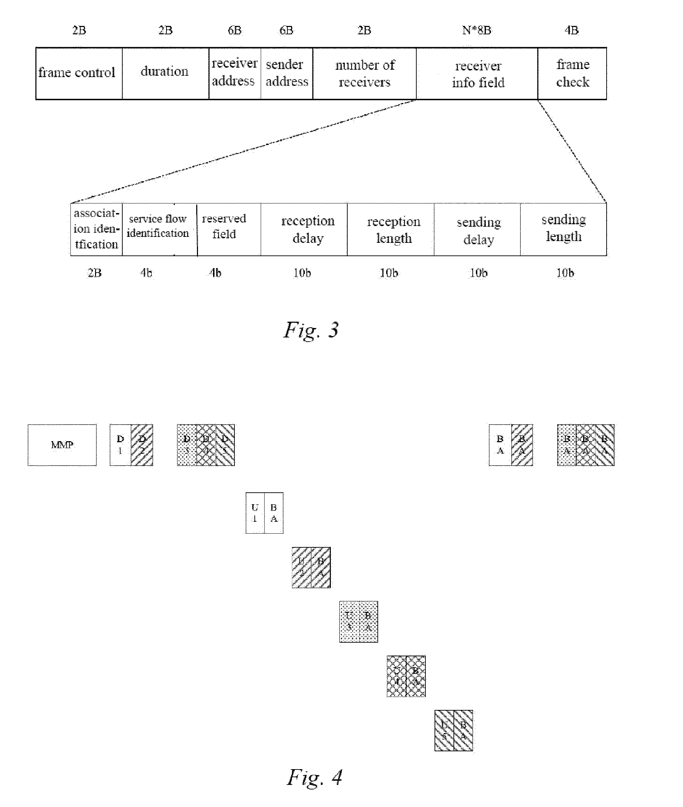

On the basis of the above solutions, a novel multiple receiver aggregation (MRA) solution is proposed to solve the problem of cyclic communication. The MRA solution is achieved by the expansion of the single-receiver aggregation (SRA) solution in the current 802.11n standards. The basic idea of SRA is to have several packets to be sent to a client terminal STA by the access point AP aggregated together, so as to form a bigger packet for sending. Two aggregation methods in SRA are respectively the aggregate MAC protocol data unit (A-MPDU) method and the aggregate MAC service data unit (A-MSDU) method. The basic idea of MRA is to have the packets to be sent to a plurality of client terminals STA1, STA2, and STA3 by the access point AP aggregated together, so as to form a big physical layer convergence protocol (PLCP) service data unit (PSDU), which is referred to as an MRA frame. Before transmitting an MRA frame, it is required to send a management frame first, which is referred to as a multiple receiver aggregation multi-poll frame (MMP) . Fig. 3 shows the frame format of an MMP.

An MMP frame contains some information indicating how the client terminals which support MRA receive the packets sent by the access point AP and send the packets from each client terminal, and the indication information is centralized in a receiver info field in the MMP frame. Specifically speaking, there are the following items: an Rx Offset for indicating when the client terminals which support MRA receive downlink data; a Tx Offset for indicating when the client terminals which support MRA send uplink data; an Rx Duration for indicating the length or the duration of the packets received by the client terminals which support MRA; and a Tx Duration for indicating the length or the duration of the packets sent by the client terminals which support MRA.

A typical sequence which uses the MRA solution to carry out data exchange is shown in Fig. 4. In Fig. 4, there is one access point and five client terminals. The access point AP aggregates the downlink data D1, D2, D3, D4, and D5 to be sent to 5 client terminals into anMRA frame for transmitting, and saidMRA frame further includes an MMP frame which is located in the front. In the MMP frame, there are 5 receiver info fields for indicating respectively how 5 client terminals receive the packets sent by the access point AP and send the packets of each client terminal. In this case, the client terminal STA1 sends an acknowledgement BA of the received data D1 to the access point AP after having received the data D1, the duration of which is Rx Duration, according to the time designated by Rx Offset in the receiver info field 1. In addition, the client terminal STA1 further sends the data U1, the duration of which is Tx Duration, according to the time designated by Tx Offset in the receiver info field 1. The client terminal STA1 can aggregate the uplink data U1 with its acknowledgement BA of the downlink data D1 together, so as to send them to the access point AP. The access point AP gives out its acknowledgement BA of the uplink data U1 after having received this uplink data U1, and this BA is the first BA located at the upper right in Fig. 4. It can be seen that, in the MRA solution, both the uplink and the downlink can be strictly controlled via the access point AP, and since the packets sent to all the client terminals are aggregated, the time expenditure in the downlink communication is reduced and the cycle time is shortened effectively.

However, there are still some problems when the MRA solution is used in communication. First of all, the acknowledgement BA for the uplink packet takes a relatively long time. This is because the acknowledgement for the downlink packet can be done by aggregating said acknowledgement into the uplink packet by way of aggregation or changing one bit of the uplink packet, thus it means that the acknowledgement for the downlink packet does not cost too much time; however, the acknowledgement for the uplink packet cannot be achieved in the way mentioned above, thus the result is that the acknowledgement for the uplink packet has to take a certain time by itself. In this way, in the case where there are quite a few client terminals, the access point will take a relatively long time to carry out acknowledgement of the uplink data sent by each client terminal. For example, in the case where there are 60 client terminals, the PSDU length aggregated by all the acknowledgements for the uplink packet would be 1198 bytes, and assuming that the transmission rate is 6 Mbps, then it would cost a time of more than 1.6 ms to carry out acknowledgement of the uplink packet. Secondly, the MRA solution only provides a basic data transmission sequence but does not give consideration to a retransmission mechanism when errors occur in the packets, therefore, the application of the MRA solution is limited.

### Contents of the invention

A main object of the present invention is to provide a communication method in an automation system, in which determinate and real-time communication can be carried out in a practical way in the automation system by using said method, so as to have the cycle time in communication shortened as much as possible.

In order to achieve the above object, the present invention proposes a communication method in an automation system, said system comprising an access point and more than one client terminals, in which said client terminals receive downlink data sent from said access point and send uplink data to said access point, and said data transmission is divided into a master multiple receiver aggregation phase and more than one slave multiple receiver aggregation phases according to the present invention; during said master multiple receiver aggregation phase, the access point aggregates the data to be sent to the more than one client terminals into one packet for transmitting in the downlink; and during said slave multiple receiver aggregation phases, the access point aggregates the data that have errors which happened therein when being transmitted during said master multiple receiver aggregation phase into one packet for transmitting in the downlink.

Preferably, during said slave multiple receiver aggregation phases, said access point first aggregates the data that have errors which happened therein when being transmitted during a previous phase into one packet for transmitting in the downlink, and then said client terminals transmit to said access point the uplink data that have errors which happened therein when being transmitted during the previous phase. Said previous phase is a master multiple receiver aggregation phase or a previous one of the slave multiple receiver aggregation phases.

In this case, each of said client terminals sends an acknowledgement of the downlink data received thereby, together with the uplink data which is to be sent thereby, to said access point via the uplink.

In addition, the packet which is sent during saidmaster multiple receiver aggregation phase comprises a master multiple receiver aggregation multi-poll frame for indicating that the data is transmitted from the access point to the more than one client terminals via the downlink for the first time and indicating that the data is transmitted from said client terminals to said access point via the uplink for the first time. The packet which is sent during said slave multiple receiver aggregation phase comprises a slave multiple receiver aggregation multi-poll frame for indicating that the data is retransmitted from the access point to more than one client terminals via the downlink and indicating that the data is retransmitted from said client terminals to said access point via the uplink.

Preferably, said slave multiple receiver aggregation multi-poll frame comprises more than one receiver information fields, with each of said receiver information fields corresponding to one of said client terminals and each of said receiver information fields including four fields for respectively indicating the time when said client terminal receives the downlink data sent from said access point, the length of the received downlink data, the time when said client terminal sends the uplink data to said access point, and the length of the sent uplink data.

Preferably, the receiver information fields for indicating the time when said client terminal sends the uplink data to said access point and the length of the sent uplink data of said slave multiple receiver aggregation multi-poll frame are set to acknowledge the uplink data sent by said client terminals during the previous phase.

In this case, said master multiple receiver aggregation multi-poll frame and said slave multiple receiver aggregation multi-poll frame are defined in a reserved domain in the multiple receiver aggregation multi-poll frame. Preferably, said master multiple receiver aggregation multi-poll frame and said slave multiple receiver aggregation multi-poll frame are defined by two bits in the reserved domain.

The present invention provides a method with stronger certainty for the communication between the access point and the client terminals. First of all, this method can not only strictly control the downlink data transmission via the access point but also strictly control the uplink data transmission via the access point. Secondly, the method of the present invention expands the original MRA solution, dividing a master-MRA phase and a slave-MRA phase for data retransmission on the basis of MRA, which makes the present invention have more practical applicability. Furthermore, the present invention further divides the MMP frame into a master-MMP frame and a slave-MMP frame; as compared to theMMP, the slave-MMP frame replaces the function of carrying out acknowledgement of the uplink in the MMP, and as compared to the MRA solution, the cycle time is further shortened.

### Description of the accompanying drawings

Hereinbelow, the particular embodiments of the present invention will be further described in detail in conjunction with the accompanying drawings, in which:
Fig. 1 is a schematic diagram of a WLAN communication using the PNIO protocol in the prior art;
Fig. 2 is a schematic diagram of data exchange in the PCF solution in the prior art;
Fig. 3 is an MMP frame format in the prior art;
Fig. 4 is a schematic diagram of a typical sequence which uses an MRA solution to carry out data exchange in the prior art;
Fig. 5 is a schematic diagram of a sequence which uses the master-slave MRA solution of the present invention to carry out data exchange;
Fig. 6 is a schematic diagram of modifying the format of an MMP frame when the master-slave MRA solution of the present invention is used; and
Fig. 7 is a simulation result, in which the cycle time of the PCF, MRA and master-slave MRA solutions are compared in the case where the BER is 10⁻⁵ and the length of the packets is different.

### Particular embodiments

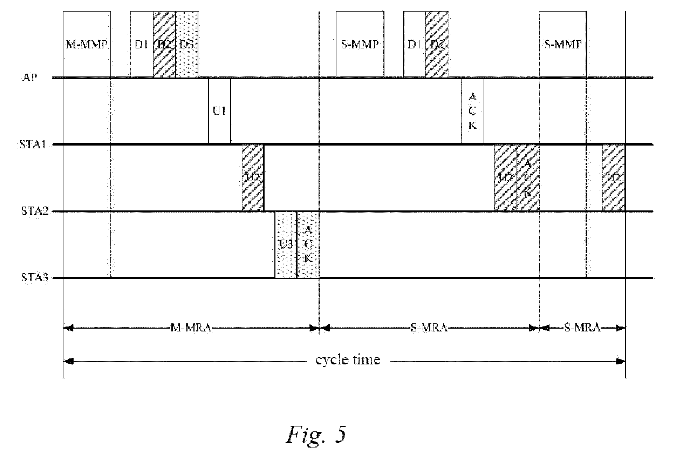

Fig. 5 is a schematic diagram of a sequence which uses the master-slave MRA solution of the present invention to carry out data exchange. The automation communication system in Fig. 5 comprises an access point AP and three client terminals STA1, STA2, and STA3. The access point AP sends downlink data to the client terminals STA1, STA2, and STA3, and the client terminals STA1, STA2, and STA3 respectively send uplink data to the access point AP.

According to the method of the present invention, the data exchange process between the access point AP and three client terminals STA1, STA2, and STA3 is divided into two phases, which respectively are a master multiple receiver aggregation phase (Master-MRA) and two slave multiple receiver aggregation phases (Slave-MRAs).

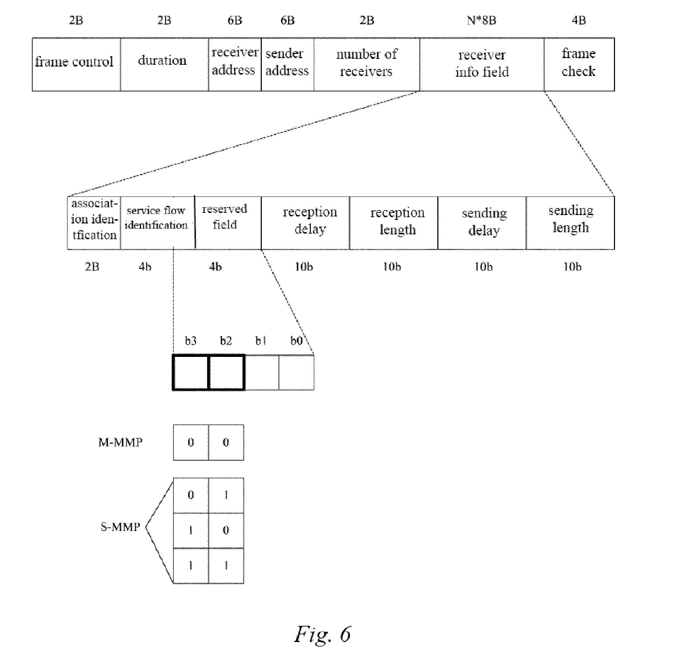

During the master multiple receiver aggregation phase (Master-MRA), the access point AP aggregates the data to be sent to client terminals STA1, STA2, and STA3 into one packet, which packet includes a master multiple receiver aggregation multi-poll frame (Master-MMP). Since there are three client terminals in this embodiment, the master-MMP also has three receiver info fields, with each receiver info field defining a data receiving and sending situation for a client terminal. Fig. 6 provides the data receiving and sending situation which is defined for a client terminal STA1 in the reserved field of a receiver info field. In this case, the master-MMP frame and slave-MMP frame are defined by using two high bits b3 and b2 of the reserved field. In the master-MMP, if the client terminal STA1 receives new downlink data from the access point AP for the first time, and the client terminal STA1 also sends new uplink data to the access point AP for the first time, then b3 and b2 are 00. In the master-MMP, the time and length of the downlink data D1 sent by the access point AP to client terminal STA1 and the time and length of the uplink data U1 sent by client terminal STA1 to the access point AP are determined by the Rx Offset, Rx Duration, Tx Offset, and Tx Duration of the receiver info field for the client terminal STA1.

Similarly, in the reserved field of the receiver info field for the client terminals STA2 and STA3, the two high bits b3 and b2 of the reserved field are also 00. In the master-MMP, the time and length of the downlink data D2 sent by the access point AP to client terminal STA2 and the time and length of the uplink data U2 sent by the client terminal STA2 to the access point AP are determined by the Rx Offset, Rx Duration, Tx Offset, and Tx Duration of the receiver info field for the client terminal STA2. In the master-MMP, the time and length of the downlink data D3 sent by the access point AP to the client terminal STA3 and the time and length of the uplink data U3 sent by the client terminal STA3 to the access point AP are determined by the Rx Offset, Rx Duration, Tx Offset, and Tx Duration of the receiver info field for the client terminal STA3.

After having received said aggregation packet, the client terminal STA1 learns that this MMP is the master-MMP by detecting that b3 and b2 are 00 and determines the time and length of the downlink data D1 sent by the access point AP received thereby and the time and length of the uplink data U1 sent to the access point AP according to the Rx Offset, Rx Duration, Tx Offset, and Tx Duration of the receiver info field. Similarly, after having received said aggregation packet, the client terminal STA2 learns that the MMP is the master-MMP by detecting that b3 and b2 are 00 and determines the time and length of the downlink data D2 sent by the access point AP which is received by the client terminal STA2 and the time and length of the uplink data U2 sent to the access point AP according to the Rx Offset, Rx Duration, Tx Offset, and Tx Duration of the receiver info field of the client terminal STA2. After having received said aggregation packet, the client terminal STA3 learns that the MMP is the master-MMP by detecting that b3 and b2 are 00 and determines the time and length of the downlink data D3 sent by the access point AP which is received by the client terminal STA3 and the time and length of the uplink data U3 sent to the access point AP according to the Rx Offset, Rx Duration, Tx Offset, and Tx Duration of the receiver info field of the client terminal STA3.

Assuming that errors occur in data D1 and D2 when they are being transmitted and data D3 is transmitted correctly, that is to say, the client terminals STA1 and STA2 cannot send out the acknowledgement ACK for the received downlink data, only the client terminal STA3 sends out the acknowledgement ACK for the received downlink data. The client terminal STA3 aggregates the uplink data U3 sent to the access point AP together with the acknowledgement ACK of the downlink data received by the client terminal STA3 for sending out.

In addition, assume that the uplink data U1 sent by the client terminal STA1 to the access point AP and the uplink data U3 sent by the client terminal STA3 to the access point AP are transmitted correctly, and an error occurs in the uplink data U2 sent by the client terminal STA2 to the access point AP when it is being transmitted. At this point, the master multiple receiver aggregation phase (Master-MRA) ends.

The master multiple receiver aggregation phase (Master-MRA) is followed by a first slave multiple receiver aggregation phase (Slave-MRA). Since the access point AP only receives the acknowledgement ACK for data D3 sent by the client terminal STA3 but does not receive the acknowledgement ACK for data D1 and data D2 sent by client terminals STA1 and STA2, the access point AP can determine that errors occurred in the downlink data D1 and D2 when they were being transmitted and it is required to retransmit data D1 and data D2. In addition, since the access point AP only receives the uplink data U1 sent by the client terminal STA1 and the uplink data U3 sent by the client terminal STA3, but does not receive the uplink data U2 sent by the client terminal STA2, it can be determined that an error has occurred in the uplink data U2 during transmission and it requires the client terminal STA2 to retransmit data U2.

The access point AP aggregates the downlink data D1 and D2 to be sent to client terminals STA1 and STA2 into one packet, which packet includes a slave multiple receiver aggregation multi-poll frame (Slave-MMP), which slave-MMP indicates that the downlink data D1 and D2 are retransmitted from the access point AP to the client terminals STA1 and STA2 via the downlink and indicates that the uplink data U2 is retransmitted from the client terminal STA2 to the access point AP via the uplink.

Particularly speaking, during the slave multiple receiver aggregation phase (Slave-MRA), the slave-MMP is still defined by the reserved field (Reserved) of the receiver info field in the MMP frame as shown in Fig. 6. Since there are three client terminals in this embodiment, the slave-MMP also has three receiver info fields, with each receiver info field defining a data receiving and sending situation for a client terminal. If the client terminal STA1 is required to resend the uplink data to the access point AP, then the reserved fields b3 and b2 in the receiver info field for the client terminal STA1 are 01; if the access point AP is required to resend the downlink data to the client terminal STA1, then the reserved fields b3 and b2 in the receiver info field for the client terminal STA1 are 10; and if not only the client terminal STA1 is required to resend the uplink data to the access point AP but also the access point AP is required to resend the downlink data to the client terminal STA1, then the reserved fields b3 and b2 in the receiver info field for the client terminal STA1 are 11. The cases of the reserved fields in the receiver info field which are defined for the second client terminal STA2 and the third client terminal STA3 are similar to this.

It has been mentioned above that since errors have occurred in the downlink data D1 and D2 sent by the access point AP to client terminals STA1 and STA2 and an error has occurred in the uplink data U2 sent by STA2 to the access point AP, these data need to be retransmitted. Therefore, b3 and b2 are set as 10 in the reserved field for the client terminal STA1, i.e. the client terminal STA1 only receives the retransmitted data D1 but does not send data. In addition, the Tx Offset and Tx Duration in the receiver info field of the client terminal STA1 can also be set as 0 respectively to indicate that the access point AP acknowledges the receiving of the uplink data U1, so it does not require the client terminal STA1 to retransmit the uplink data U1. That is to say, setting the Tx Offset and Tx Duration fields in the receiver info field of the slave-MMP achieves the acknowledgement of the uplink data U1 transmitted by the client terminal STA1 in the slave-MMP, and it is not required to take additional time to acknowledge the uplink data, thus the cycle time is reduced. In the reserved field for the client terminal STA2, b3 and b2 are set as 11, i.e. the client terminal STA2 not only receives the retransmitted data D2 but also sends the retransmitted data U2. Similarly, the Tx Offset and Tx Duration in the receiver info field of the client terminal STA3 can also be set as 0 respectively to indicate that the access point AP acknowledges the receiving of the uplink data U3.

During the first slave multiple receiver aggregation phase (Slave-MRA), after having received the aggregation packet sent by the access point AP, the client terminal STA1 learns that the MMP is a slave-MMP by detecting that b3 and b2 in the reserved field Reserved of the receiver info field of STA1 in the slave-MMP frame are 10, needs to receive the downlink data D1 again, and determines the time and length of the downlink data D1 sent by the access point AP received thereby according to the Rx Offset and Rx Duration in the receiver info field of STA1.

Similarly, after having received said aggregation packet sent by the access point AP, the client terminal STA2 learns that the MMP is a slave-MMP by detecting that b3 and b2 in the reserved field Reserved of the receiver info field of STA2 in the slave-MMP frame are 11, needs to receive the downlink data D2 again and resend the uplink data U2, and determines the time and length of the downlink data D2 sent by the access point AP received thereby and the time and length of the uplink data U2 sent to the access point AP according to the Rx Offset, Rx Duration, Tx Offset, and Tx Duration of the receiver info field of STA2.

Assuming that data D1 and D2 are retransmitted correctly, then client terminals STA1 and STA2 respectively give out the acknowledgements ACK for the received downlink data D1 and D2 and send these two acknowledgements ACK to the access point AP. In addition, assume that an error still occurs the uplink data U2 sent by the client terminal STA2 to the access point AP during retransmission. At this point, the first slave multiple receiver aggregation phase (Slave-MRA) ends.

The first slave multiple receiver aggregation phase (Slave-MRA) is followed by a second slave multiple receiver aggregation phase (Slave-MRA) . Since the access point AP receives the acknowledgement ACK of data D3, sent by client terminals STA1 and STA2, the access point AP can determine that the downlink data D1 and D2 have been retransmitted correctly. In addition, since the access point AP does not receive the uplink data U2 sent by the client terminal STA2, it can be determined that an error has occurred in the uplink data U2 during retransmission, and it requires the client terminal STA2 to retransmit data U2.

In the reserved field for the client terminal STA2, b3 and b2 are set as 01, i.e. the client terminal STA2 only sends the retransmitted data U2 and does not need to receive the retransmitted data.

During the second slave multiple receiver aggregation phase (Slave-MRA), after having received the packet including the slave-MMP sent by the access point AP, the client terminal STA2 learns that the MMP is a slave-MMP by detecting that b3 and b2 in the reserved field Reserved of the receiver info field of STA2 in the slave-MMP frame are 01, needs to resend the retransmitted data U2, and determines the time and length of the uplink data U2 resent thereby according to the Tx Offset and Tx Duration in the receiver info field of STA2. At this point, the second slave multiple receiver aggregation phase (Slave-MRA) ends.

In order to prove the effectiveness of the master-slave MRA method proposed by the present invention, simulation of this method is carried out and it is compared with the PCF and MRA methods. Said simulation was carried out on the basis of a simulator ns2. It is assumed that the I/O controller communicates with 32 I/O devices, i.e. one access point and 32 client terminals. This simulation is based on the following assumptions: only the packet error rate of the data frames is taken into account; since the packet error rate of the control/management frame is very small, it is not taken into account; the uplink and downlink use the same packet length; in order to obtain the maximum cycle time required, the number of times of retransmission is not limited; the GreenField mode in 802.11n is used during the whole simulation process; and the transmission rate of downlink data is 130 Mbps and there are 2 spatial streams, while the transmission rate of uplink data is 65 Mbps and there is 1 spatial stream.

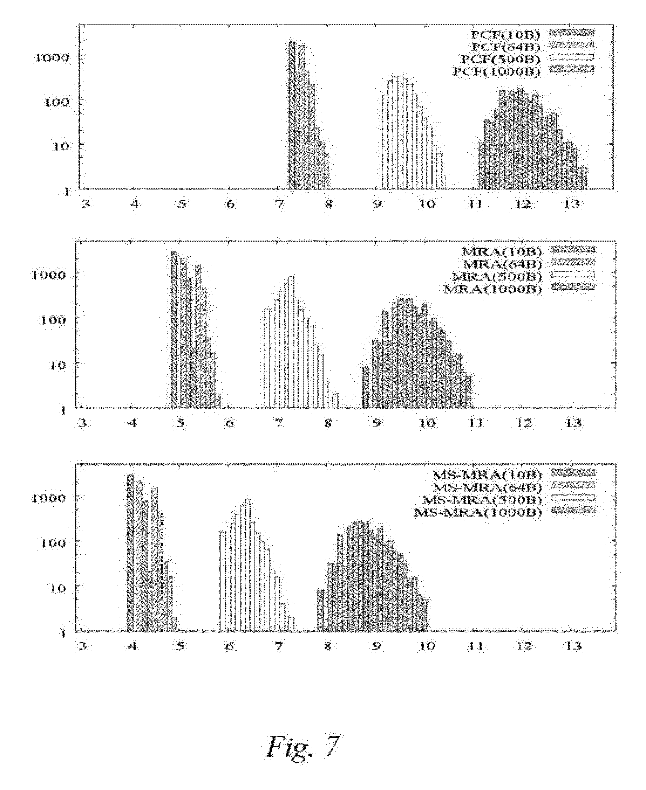

Fig. 7 is a simulation result, in which the cycle times of the PCF, MRA, and master-slave MRA solutions are compared in the case where BER is 10⁻⁵ and the packet lengths are different. In Fig. 7, the horizontal axis represents the cycle time, with the unit being milliseconds ms. The vertical axis represents the number of the times that appear during one certain cycle time period. The uppermost diagram in Fig. 7 is the simulation result when the PCF solution is used and the packet lengths are different; the middle diagram is the simulation result when the MRA solution is used and the packet lengths are different; and the lowermost diagram is the simulation result when the master-slave MRA solution is used and the packet lengths are different. In this case, right slash, left slash, blank line, and grid line in each of the figures represent the simulation results when the packet lengths are 10 B, 64 B, 500 B, and 1000 B respectively. It can be easily seen from Fig. 7 that: first of all, no matter how long the packet lengths are, the master-slave MRA solution proposed by the present invention always has the shortest cycle time. Secondly, with the increase of the packet length, the cycle time becomes more and more dispersed in all three solutions PCF, MRA, and master-slave MRA. However, the time interval of the cycle time for each solution is relatively stable, for example, the interval between the master-slave MRA and the PCF in this simulation is 3.5 ms. Furthermore, with the increase of the packet length, the cycle times in the three solutions PCF, MRA and master-slave MRA are all increased, which is due to the increase of the retransmission time required.

What are described above are merely the preferred embodiments of the present invention, and it should be pointed out that those skilled in the art can make some improvements and modifications without departing from the principles of the present invention, and these improvements and modifications should also be viewed as within the protection scope of the present invention.

## Claims

1. A communication method in an automation system, said system comprising an access point and more than one client terminals, with said client terminals receiving downlink data sent from said access point and sending uplink data to said access point, **characterized in that**
said data transmission is divided into a master multiple receiver aggregation phase and more than one slave multiple receiver aggregation phases;
during said master multiple receiver aggregation phase, the access point aggregates the data to be sent to more than one client terminals into one packet for transmitting in the downlink; and
during said slave multiple receiver aggregation phases, the access point aggregates the data in which errors have happened when being transmitted during said master multiple receiver aggregation phase into one packet for transmitting in the downlink.

2. The communication method in an automation system as claimed in claim 1, **characterized in that** during said slave multiple receiver aggregation phases, said access point first aggregates the data in which errors have happened when being transmitted during a previous phase into one packet for transmitting in the downlink, and then said client terminals transmit to said access point the uplink data in which errors have happened when being transmitted during the previous phase.

3. The communication method in an automation system as claimed in claim 2, **characterized in that** said previous phase is a master multiple receiver aggregation phase or a previous one of the slave multiple receiver aggregation phases.

4. The communication method in an automation system as claimed in any one of claims 1 to 3, **characterized in that** each of said client terminals sends via the uplink to said access point an acknowledgement of the downlink data received thereby together with the uplink data which are to be sent thereby.

5. The communication method in an automation system as claimed in any one of claims 1 to 3, **characterized in that** the packet sent during said master multiple receiver aggregation phase comprises a master multiple receiver aggregation multi-poll frame for indicating that the data is transmitted from the access point to the more than one client terminals via the downlink for the first time and indicating that the data is transmitted from said client terminals to said access point via the uplink for the first time.

6. The communication method in an automation system as claimed in any one of claims 1 to 3, **characterized in that** the packet sent during each of said slave multiple receiver aggregation phases comprises a slave multiple receiver aggregation multi-poll frame for indicating that the data is retransmitted from the access point to the more than one client terminals via the downlink and indicating that the data is retransmitted from said client terminals to said access point via the uplink.

7. The communication method in an automation system as claimed in claim 6, **characterized in that** said slave multiple receiver aggregation multi-poll frame comprises more than one receiver information fields, with each said receiver information field corresponding to one of said client terminals and each said receiver information field comprising four fields for respectively indicating the time when said client terminal receives the downlink data sent from said access point, the length of the downlink data received, the time when said client terminal sends the uplink data to said access point, and the length of the uplink data sent.

8. The communication method in an automation system as claimed in claim 7, **characterized in that** the receiver information fields for indicating the time when said client terminal sends the uplink data to said access point and the length of the uplink data sent in said slave multiple receiver aggregation multi-poll frame are set to acknowledge the uplink data which are sent by said client terminal in the previous phase.

9. The communication method in an automation system as claimed in claim 5 or 6, **characterized in that** said master multiple receiver aggregation multi-poll frame and said slave multiple receiver aggregation multi-poll frame are defined in a reserved domain of the multiple receiver aggregation multi-poll frame.

10. The communication method in an automation system as claimed in claim 9, **characterized in that** said master multiple receiver aggregation multi-poll frame and said slave multiple receiver aggregation multi-poll frame are defined by two bits in the reserved domain of the multiple receiver aggregation multi-poll frame.
